# EUROPEAN PATENT APPLICATION

(11) **EP 1 220 560 A2**
(43) Date of publication of application: **03.07.2002**
(21) Application number: 01130874.9
(22) Date of filing: 27.12.2001
(51) Int. Cl.: H04Q 7/38

(54) **Operator selection method for a mobile station**

(30) Priority: 29.12.2000 KR 2000085144
(71) Applicant: SAMSUNG ELECTRONICS CO., LTD., Suwon-City, Kyungki-do (KR)
(72) Inventor: Park, Hong-Ju, c/o Samsung Electronics Co., Ltd., Suwon-city, 442-370, Kyungki-do (KR)
(74) Representative: Grünecker, Kinkeldey, Stockmair & Schwanhäusser Anwaltssozietät

(57) **Abstract**

Disclosed is an information servicing method for a mobile station in an environment enabling network operators to roam among themselves. The method according to the invention includes the steps of obtaining information on the network operators and RSSI from each base station accessible by the mobile station when selecting network operators, and providing a representative received signal strength indication (RSSI) for each network operator to a mobile station user based on the obtained information.

## Description

The present invention relates generally to a mobile telecommunication system, and in particular, to an information servicing method for mobile stations in a mobile telecommunication environment enabling mobile telecommunication service providers (hereinafter, referred to as "network operators") to roam among themselves.

In a mobile telecommunication environment enabling network operators to roam among themselves, such as the global system for mobile telecommunications (GSM), mobile stations are intended to provide services for users by selecting any one of numerous network operators around the terminals. For that purpose, a GSM mobile station has network selection modes classified into "automatic" and "manual". The functions of a mobile station are distinguished depending on the status of setting a network selection mode.

The following are scenarios of searching network operators around a mobile station under a mobile telecommunication environment enabling network operators to roam among themselves: when the mobile station is initially switched on by a user; when the mobile station is out of the area where radio services are provided under a normal service providing state; or when the user shifts the network selection mode from "automatic" to "manual".

When the circumstances require searching for network operators as exemplified above, the mobile station primarily searches network operators accessible from the area where the user is located even if a network selection mode has been set. The measures taken by the mobile station, based on the network operators list after the searches, are variable depending on the setting of the network selection mode. If the network selection mode has been set to "automatic", the network service beneficiaries are determined based on the priority order pre-set from the network operators obtained as a result of searches. If the network selection mode has been set to be "manual", the mobile station enables the user to select another network service beneficiary by displaying the network operators list obtained as a result of searches.

If the network selection mode has been set to be "automatic", the priority order of the network service beneficiaries are decided as shown in the following example.
1. Registered network operators
2. Home network operators
3. Operators selected according to a priority order stored in a subscriber identity module (SIM)
4. Operators selected according to a random order of the received electric field intensity higher than -85dBm
5. Operators selected according to a descending order of the received electric field intensity.

When the network selection mode has been set to be "manual", the mobile station displays the network operators list according to the same priority order as the above when the operators list obtained as a result of searching is displayed through a display module.

As described above, names of the network operators are enlisted in the priority order when displaying the network operators for the user under the conventional technology. This means that no information has been provided with respect to the received electric field status of the current position. Since the information on the priority order only is provided for the user, the user selects the network operators without considering the received electric field status of the current position of the network operators. The electric field status of the mobile station MS with respect to the top priority network service operator may be worse than that of the other network service operator. Selecting a network service operator of the top priority under these circumstances may result in failure that could be avoided by using the services of higher quality.

It is, therefore, the object of the present invention to provide an information servicing method for mobile stations in a mobile telecommunication environment enabling network operators to roam among themselves so as to enhance quality of services for mobile station users.

According to an aspect of the present invention, there is provided an information servicing method which is convenient for manually searching network operators around the mobile station users in a mobile telecommunication environment enabling network operators to roam among themselves.

To achieve the above object, an information servicing method for mobile stations enabling a mobile station user to provide information on the electric field intensity of the area where the mobile station is currently located together with the names of the network operators in selecting network operators in a network selection mode is provided.

The above object, features and advantages of the present invention will become more apparent from the following detailed description when taken in conjunction with the accompanying drawings, in which:
Fig. 1 is a diagram illustrating the respective locations of each network operator around a mobile station;
Fig. 2 is a view of a display module in a mobile station enlisting network operators according to the conventional art;
Fig. 3 is a block diagram illustrating a construction of a mobile station according to an embodiment of the present invention;
Fig. 4 is a flow chart illustrating a control according to an embodiment of the present invention; and
Fig. 5 is a view of a display module in a mobile station enlisting network operators and the corresponding information on RSSI according to an embodiment of the present invention.

A preferred embodiment of the present invention will be described herein below with reference to the accompanying drawings. In the following description, well-known functions or constructions are not described in detail since they would obscure the invention in unnecessary detail.

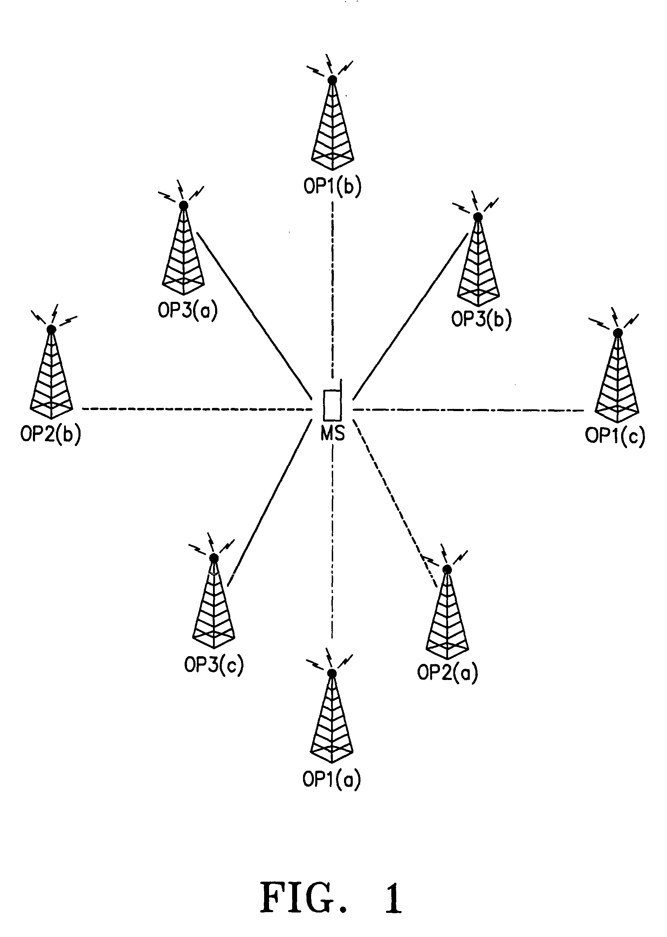

Fig. 1 is a diagram illustrating the respective locations of mobile stations MS in base stations of each network operator in an environment of mobile telecommunications enabling each network operator to roam among themselves. The network operators enlisted in Fig. 1 are indicated as OP1, OP2, OP3, etc. The references a, b, c annexed to the parentheses after each name of the network operator are representative base stations, which may be reference frequencies, for example.

If the mobile station MS measures a received signal strength indication (RSSI) of the base station around the mobile station MS under the circumstances as shown in Fig. 1, the result as shown in Table 1 below can be obtained.

**Table 1**

| Received Signal Strength Indications of the Respective Base Stations Measured by the Mobile Station MS | |
|---|---|
| Base Station | RSSI (dBm) |
| OP3(a) | -60 |
| OP3(b) | -62 |
| OP3(c) | -65 |
| OP2(a) | -68 |
| OP2(b) | -82 |
| OP1(a) | -85 |
| OP1(b) | -88 |
| OP1(c) | -90 |

When the network selection mode of the mobile station MS has been set to be "manual", the mobile station MS should display a list of the network operators for the user as shown in Table 1 above. In case of GSM, the specification of GSM 03.22 stipulates not to duplicate the names of the network operators when enlisting the network operators.

Thus, assuming that the priority order is OP1, OP2, and OP3, the conventional art displays the priority in the same order on the display window 10 of the mobile station MS even if the result has been obtained as shown in Table 1.

According to an embodiment of the present invention, when the user manually selects network operators in a network selection mode, the information on the electric field status of the mobile station currently positioned is provided for the mobile station user together with the names of the network operators. As a consequence, high quality services available for the user.

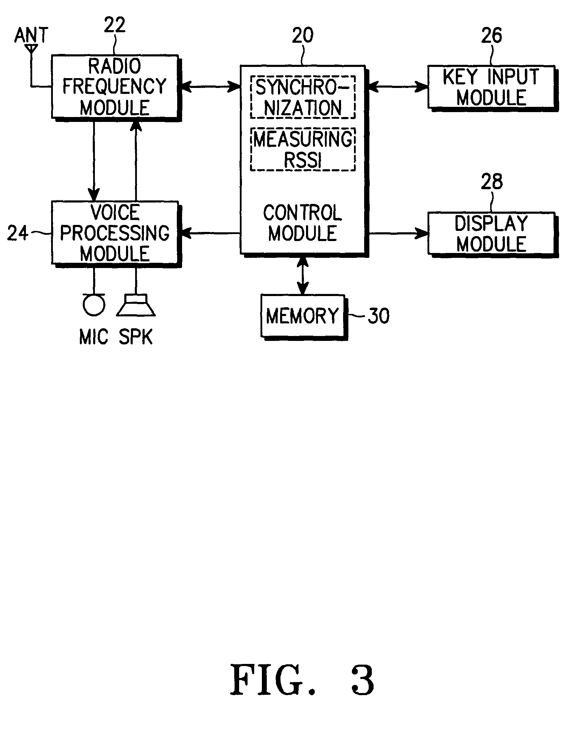

Fig. 3 is a schematic block diagram of the mobile station according to an embodiment of the present invention. Referring to Fig. 3, a control module 20 comprehensively controls the operation of a portable radio terminal. According to an embodiment of the present invention, the control module 20 synchronizes each base station around the mobile station and reads in system information including the information identifying network operators, while measuring RSSI of the received signal from a radio frequency module 22. The radio frequency module 22 controls transmission and reception of the voice data and control data under a control by the control module 20. A signal strength indication detecting module 23 detects the signal strength indication, and outputs the same to the control module 20. A voice processing module 24 converts the voice data received from the radio frequency module 22 to an audible sound, outputs the audible sound through a speaker SPK, changes the voice signal received from a microphone to data, and outputs the data to the radio frequency module 22. The key input module 26 comprises a number of numeric keys and functional keys for outputting key input data corresponding to the keys pushed by the user to the control module 20. The display module 28 displays diverse messages under a control by the control module 20. The memory 30 includes a program memory for storing program data necessary for controlling operation of the cellular phone, and a data memory for storing data generated in the course of performing operations by the user. According to an embodiment of the present invention, the data memory of the memory 30 comprises a storing table composed of the names of the network operators and the corresponding information on RSSI.

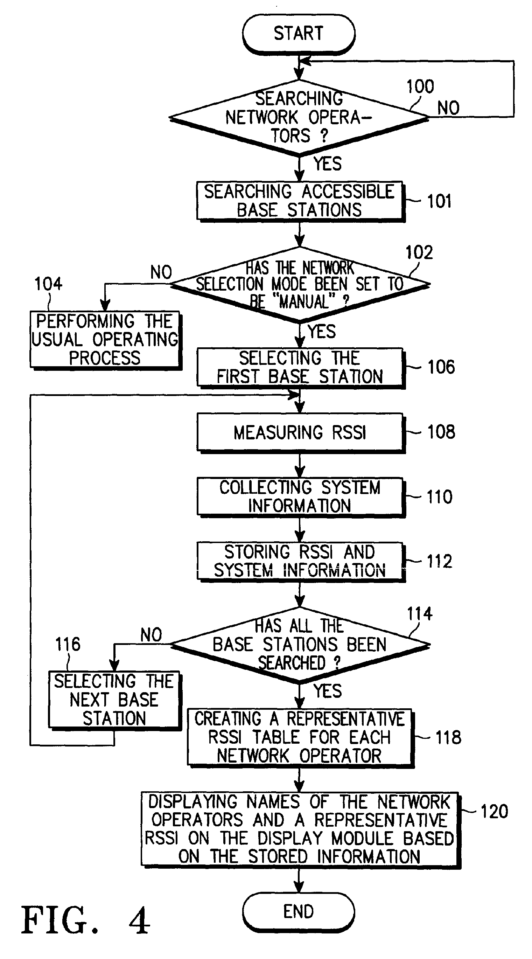

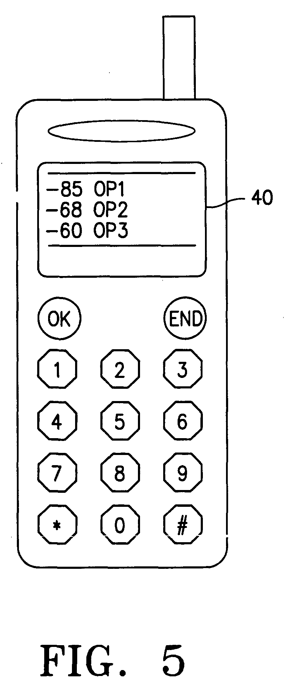

Fig. 4 is a flow chart illustrating a control performed by the control module 20 according to an embodiment of the present invention. Fig. 5 is a view displayed on a display window 40 of a display module 28 in a mobile station enlisting network operators and the corresponding information on RRSI according to an embodiment of the present invention.

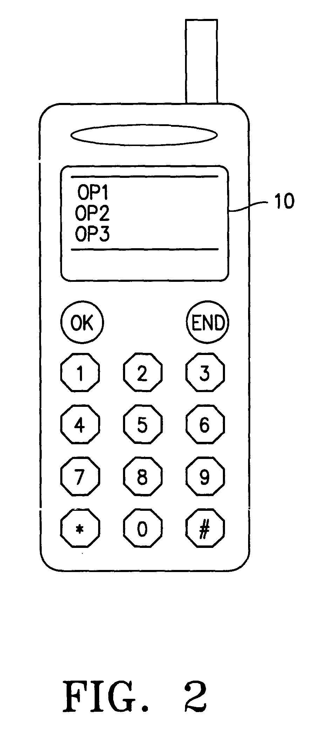

The following is a detailed description of an operation according to an embodiment of the present invention made with reference to Figs. 1 to 5.

In an environment of mobile telecommunications enabling network operators to roam among themselves, the control module 20 of the mobile station determines whether or not the network operators have been searched in step 100 of Fig. 4. As described above with reference to an embodiment, the network operators searching status occurs when the mobile station is initially switched on by the user or is out of radio frequency service area under a normal service state, or the user has shifted the network selection mode from "automatic" to "manual". When the network operators searching status occurs, the control module 20 proceeds with step 101 of Fig. 4 to search accessible base stations of the network operators around the mobile station. Thereafter, the mobile station 20 proceeds with step 102, and determines whether the network selection mode has been set to "manual" or "automatic". In case of "automatic", the control module 20 of the mobile station proceeds with step 104 of Fig. 4 to perform the usual operating process for searching the network operators.

Conversely, if the network selection mode in step 102 of Fig. 4 is "manual", the control module 20 of the mobile station proceeds with step 106 to select the base station having the highest RSSI as the first base station among all the accessible base stations. Thereafter, the control module 20 proceeds with step 108 to measure the RSSI at the mobile station with respect to the first base station. The control module 20 further proceeds with step 110 to synchronize with the corresponding base station, and to collect system information including the information on the network operator identifier. According to an embodiment of the present invention, it is preferable for the system information to include the network operator identifier and the original identifier. In the GSM mobile telecommunications, the system information becomes a location area identity (LAI) composed of the network ID and the base station ID. After performing the step 110, the control module 20 proceeds with step 112 to store the measured RSSI and the system information in the memory 30 as a table.

Subsequently, the control module 20 proceeds with step 114 to determine whether or not the searches have been conducted with respect to all the accessible base stations. In the negative, the control module 20 proceeds with step 116 to select the base station having the second highest RSSI among all the accessible base stations. The control module 20 then returns to step 108 to perform the same operations therefrom.

If the searches are completed for all the base stations, the information as shown in Table 2 below is stored in the table of the memory 30. Table 2 shows the information obtained under the environment of mobile telecommunications as in Table 1.

**Table 2**

| System Information | RSSI (dBm) |
|---|---|
| Network Operator (Base Station) | |
| OP3(a) | -60 |
| OP3(b) | -62 |
| OP3(c) | -65 |
| OP2(a) | -68 |
| OP2(b) | -82 |
| OP1(a) | -85 |
| OP1(b) | -88 |
| OP1(c) | -90 |

After performing step 114 to search all the base stations, the control module 20 edits Table 3 as shown below based on Table 2. Here, the RSSI is defined by a value that can represent the RSSI of the network operator when numerous RSSIs have been measured by a plurality of base stations for a single network operator. Variable methods may be available for defining the representative RSSI. According to an embodiment of the present invention, the greatest value is defined to be the representative RSSI among the numerous RSSIs. Accordingly, the representative RSSI of the network operator OP3 becomes - 60(dBm), while that of the network operator OP2 becomes -68 (dBm). The representative RSSI of the network operator OP1 becomes -85(dBm).

**Table 3**

| Name of the Network Operator | Representative RSSI |
|---|---|
| Network Operator 1 | Signal 1 |
| Network Operator 2 | Signal 2 |
| Network Operator 3 | Signal 3 |

Thereafter, the control module 20 proceeds with step 120 in Fig. 4 to display the representative RSSI value for each network operator, i.e., the names of the operators, and the corresponding representative RSSI value on the display module 28. Fig. 5 illustrates an example of a view displayed on the display window 40 of the display module 28 in a mobile station enlisting network operators and the corresponding information on RRSI according to an embodiment of the present invention.

Once the representative RSSI values for each network operator are displayed, the received signal status around the mobile station can be acknowledged, and other network operators can be selected if necessary.

## Claims

1. A method of information servicing for a mobile station in an environment enabling network operators to roam among themselves, comprising the steps of:
obtaining information on the network operators and received signal strength indication (RSSI) from each base station accessible by the mobile station when selecting network operators; and
providing a representative RSSI for each network operator to a mobile station user based on the obtained information.

2. The method of claim 1, wherein the representative RSSI is a value that represents the RSSI of a corresponding network operator among the RSSIs measured from a plurality of base stations for a single network operator by the mobile station.

3. The method of claim 1 or 2, wherein the representative RSSI is the highest value among all the RSSIs measured from a plurality of base stations for a single network operator by the mobile station.

4. The method of one of the claims 1 to 3, wherein
the step of obtaining information comprises obtaining information on the network operators and RSSI from each base station accessible by a mobile station when a network selection mode has been set to "manual" status; and
the step of providing a representative RSSI comprises expressing the representative RSSI for each network operator into a first table based on the obtained information;
storing the first table; and
displaying names of the network operators and the corresponding representative RSSI based on the stored first table on a display module of the mobile station.

5. The method of claim 4, wherein
the step of obtaining information on RSSI comprises measuring RSSI with respect to each of the base stations beginning with the one having the highest RSSI among all the base stations;
synchronizing the measured RSSI with the corresponding base station to collect system information including the network operator identifier;
storing the measured RSSI and the collected system information as a second table; and
the step of expressing the representative RSSI comprises creating the first table composed of names of the network operators and the corresponding representative RSSI by using the second table.
